# EUROPÄISCHE PATENTSCHRIFT

(11) **EP 3 467 454 B1**
(45) Veröffentlichungstag und Bekanntmachung des Hinweises auf die Patenterteilung: **16.10.2024**
(21) Anmeldenummer: 18197611.9
(22) Anmeldetag: 28.09.2018
(51) Int. Cl.: G01F 23/80, G01F 25/20, G01F 23/14, G01F 23/28, G01F 25/00

(54) **MESSSYSTEM ZUM ERMITTELN UND ÜBERWACHEN VON MESSWERTEN FÜR BESTIMMTE PHYSIKALISCHE GRÖSSEN UND VERFAHREN ZUM BETRIEB EINES SOLCHEN MESSSYSTEMS**
MEASURING SYSTEM FOR DETERMINATION AND MONITORING MEASURED VALUES FOR PARTICULAR PHYSICAL VARIABLES AND METHOD FOR OPERATING SUCH A MEASURING SYSTEM
SYSTÈME DE MESURE PERMETTANT DE DÉTERMINER ET DE SURVEILLER DES VALEURS MESURÉES POUR GRANDEURS PHYSIQUES SPÉCIFIQUES ET PROCÉDÉ DE FONCTIONNEMENT D'UN TEL SYSTÈME DE MESURE

(30) Priorität: 06.10.2017 DE 202017106083 U
(43) Veröffentlichungstag der Anmeldung: 10.04.2019
(73) Patentinhaber: ACS-Control-System GmbH, 84307 Eggenfelden (DE)
(72) Erfinder: Stümpfl, Joachim, 84307 Eggenfelden (DE)
(74) Vertreter: Winter, Brandl - Partnerschaft mbB

(56) Entgegenhaltungen:
- CN-A- 106 595 806
- US-A1- 2007 194 981
- A. FLAMMINI ET AL: "Wireless Sensor Networking in the Internet of Things and Cloud Computing Era", PROCEDIA ENGINEERING, vol. 87, 1 December 2014 (2014-12-01), AMSTERDAM, NL, pages 672 - 679, XP055564887, ISSN: 1877-7058, DOI: 10.1016/j.proeng.2014.11.577

## Beschreibung

Die Erfindung betrifft ein Messsystem zum Ermitteln und Überwachen von Messwerten für bestimmte physikalische Größen nach Anspruch 1 und Verfahren zum Betrieb eines solchen Messsystems nach Anspruch 10.

Bei der Messung von physikalischen Größen, wie z. B. Spannung, Kraft, Entfernungen, Füllständen, etc. stellt sich immer die Frage wie zuverlässig die ermittelten bzw. gemessenen Messwerte sind. Insbesondere, wenn die Messstationen weit voneinander entfernt sind, kann die Überprüfung der einzelnen Messstationen sehr aufwendig werden.

Die Firma ACS-CONTROL-SYSTEM fertigt und vertreibt seit Jahren batteriebetriebene Pegelsonden, die optional mit einem GSM-Fernübertragungsmodul ausgerüstet werden können (http://www.acs-controlsystem.de/de/produkte/pegelmessung/). Diese Pegelsonden arbeiten nach einem bestimmten physikalischen Prinzip, insbesondere wird der Füllstand oder Pegelstand einer Flüssigkeitssäule durch den hydrostatischen Druck der Wassersäule ermittelt. Für die Druckmessung wird ein kapazitiver Drucksensor verwendet. Die ermittelten Messwerte werden dann umgerechnet, z. B. auf Meter-Wassersäule oder aber auch auf einen anwenderskalierbaren Messwert, wie z. B. Meter über Normalnull.

Die Messwerte werden unverlierbar in der Sonde gespeichert und können entweder manuell vor Ort ausgelesen werden oder die Daten werden mittels dem GSM-Fernübertragungsmodul auf eine entfernt angeordnete Überwachungseinrichtung oder Datenplattform übertragen. Beim manuellen Auslesen wird zyklisch die Messstelle aufgesucht und mittels Laptop, Handheld-PC oder auch Smartphone werden die gesammelten Messwerte aus der Pegelsonde heruntergeladen. Werden die Daten automatisch auf eine Plattform übertragen, kann diese sich entweder im Internet als Cloud befinden oder aber auch beim Kunden auf einen eigenen Server installiert sein.

Die Einsatzgebiete umfassen Pegelmessungen an Flussläufen, Stauseen, Grundwassermonitoring, Hochwasserschutz, Altlastenüberwachung in Deponien, Becken in Kläranlagen, Regenwasserüberlaufbecken usw.

Ein Problem stellt hierbei die Verifizierung der Messwerte dar. Z.B. verlangt die übergeordnete Behörde der Wasserwirtschaftsämter in Bayern von ihren Behörden und auch von großen Kraftwerksbetreibern eine zyklische Kontrollmessung. Diese muss in der Regel alle vier Wochen vor Ort durch eine Messung mittels Lichtlot oder ähnlichem erfolgen. Damit will man sicherstellen, dass der elektronisch ermittelte Messerwert in Ordnung und die Messsonde nicht ausgefallen ist. Diese häufigen Kontrollmessungen stellen einen immensen Personal und Kostenaufwand dar. Dies kann in Zeiten von Fachkräftemangel und Einsparzwängen immer weniger bewältigt werden. Zudem wird durch die notwendigen Vorortmessungen an der Messstelle die automatische Datenübertragung immer mehr in Frage gestellt.

Wie bereits erwähnt, stellt sich auch bei Messvorrichtungen für andere physikalische Größen als Füllstände die Frage nach der Validierung der Messwerte.

CN 106595806 A sieht eine Vorrichtung zur Überwachung eines Flüssigkeitspegels vor, bei der ein hydrostatischer Drucksensor und ein Radarsensor verwendet werden, wobei bei Über- bzw. Unterschreiten eines bestimmten Füllstands nur der hydrostatische Drucksensor bzw. der Radarsensor eingeschaltet und der jeweils andere Sensor deaktiviert wird. US 2007/194981 A1 offenbart ein redundantes Pegelmesssystem, bei dem zwei Pegelwerte gemessen und verglichen werden und beim Überschreiten eines Schwellwerts ein Alarmsignal erzeugt wird.

Ausgehend von der CN 106595806 A ist es daher Aufgabe der Erfindung ein Messsystem zum Ermitteln und Überwachen von Messwerten für bestimmte physikalische Größen und Verfahren zum Betrieb eines solchen Messsystems zu schaffen, die eine Überprüfung oder Validierung ohne aufwendige Kontrollmessungen vor Ort ermöglicht und bei welchem der Wartungsaufwand minimiert wird.

Die Lösung dieser Aufgabe erfolgt durch die Merkmale des Anspruchs 1 bzw. 10.

Durch die Anbindung von Messeinrichtung oder Messstationen mittels Datenfernübertragungsmodul an eine Internetplattform können Messdaten einer Mehrzahl von räumlich getrennt angeordneten Messvorrichtungen zentral verwaltet, abgefragt und analysiert werden. Dadurch, dass jede Messeinrichtung eine Hauptmesssonde und eine Kontrollmesssonde aufweist, die nach zwei unterschiedlichen physikalischen Messprinzipien arbeiten, wird sichergestellt, dass die Messung einer bestimmten physikalischen Größe, z. B. ein Füllstand, korrekt erfolgt ist. D. h. die Messeinrichtungen verifizieren ihre Messwerte quasi selbst. Ein mit hohem Personalaufwand verbundenes regelmäßiges Nachmessen am jeweiligen Ort der Messeinrichtung entfällt damit.

Dadurch, dass die ersten Zeitabstände bei der Hauptmesssonde kleiner als die zweiten Zeitabstände bei der Kontrollmesssonde sind, wird die Kontrollmessung durch die Kontrollmesssonde nicht für jeden durch die Hauptmesssonde ermittelten Messwert ermittelt, sondern nur einmal am Tag oder nur für jeden zehnten Hauptmesswert. Durch die Verringerung der Anzahl der Kontrollmessungen kann Energie gespart werden und so der Wartungsaufwand z. B. für den Austausch einer Batterie verringert werden.

Durch die erfindungsgemäße Verarbeitungs- bzw. Auswerteeinrichtung kann die zulässige oder gewünschte Übereinstimmung der beiden Messwerte innerhalb eines Toleranzbereiches eingestellt werden. Die Abweichung der beiden Messwerte wird abgespeichert oder mittels eines Datenfernübertragungsmoduls oder auch Ethernet zu einer Überwachungseinrichtung übertragen. Liegt die Abweichung nicht innerhalb eines voreingestellten Toleranzbereichs, wird ein Alarm abgesetzt. Die Größe des Toleranzbereiches kann durch den Anwender selbst eingestellt werden - Anspruch 5.

Üblicherweise erfolgt die Energieversorgung der Messeinrichtungen über eine elektrische Leitung vor Ort. Durch die Ausgestaltung nach Anspruch 2 sind die Messeinrichtungen energieautark.

Die Übertragung der Daten zwischen den Datenfernübertragungsmodulen in den Messvorrichtungen und der Internetplattform erfolgt nach Anspruch 3 bevorzugt über Mobilfunknetze, z. B. mittels LTE- und GSM-Protokollen, und insbesondere mittels LPWA-Netzprotokollen (Low-Power-Wide-Area), wie dem NB-IOT- und LTE-Cat-M1-Protokoll. Mobilfunknetze stehen flächendeckend zur Verfügung und durch die LPWA-Protokolle verringert sich der Energieverbrauch der Messvorrichtungen.

Durch die Ausgestaltung nach Anspruch 4 lassen sich Messdaten vor Ort auf einfache Weise mittels mobilen Kommunikationsgeräten (Smartphones) auslesen und analysieren.

Ein bevorzugtes Einsatzgebiete sind nach Anspruch 6 Pegel- oder Füllstandsmessungen, insbesondere an Flussläufen, Stauseen, Grundwassermonitoring, Hochwasserschutz, Altlastenüberwachung in Deponien, Becken in Kläranlagen, Regenwasserüberlaufbecken usw.

Die Kombination eine Hauptmesssonde, die den Pegel mittels hydrostatischem Druck misst und einer Kontrollmesssonde, die den Pegel mittels Ultraschall, Radar oder Licht erfasst nach Anspruch 7 hat sich als vorteilhaft erwiesen, da die Pegelmesssonde, die den Pegel mittels hydrostatischem Druck misst, sehr robust und zuverlässig ist.

Gemäß der vorteilhaften Ausgestaltung nach Anspruch 8 können einzelne Messvorrichtungen auch andere physikalische Größen messen. Diese zusätzlichen Messgrößen können nur auf einfache Art oder wiederum selbstvalidierend mittels zweier unterschiedlicher Messprinzipien erfasst werden.

Durch die vorteilhafte Ausgestaltung nach Anspruch 9 kann die Auswerteeinheit und insbesondere das Datenfernübertragungsmodul erhöht an einer Stelle mit besserem Empfang positioniert werden.

Gemäß dem Betriebsverfahren nach Anspruch 10 erfasst die Hauptmesssonde die Messwerte in vorbestimmten ersten Zeitabständen, die Kontrollmesssonde erfasst die Messwerte in zweiten vorbestimmten Zeitabständen.

Durch Vergleich der Messwerte und bei Übereinstimmung innerhalb eines vorbestimmten Toleranzbereichs wird von einem ordnungsgemäßen Betrieb und korrekter Messung ausgegangen. Bei Abweichungen außerhalb des Toleranzbereichs wird eine Alarm- oder Fehlermeldung erzeugt.

Dadurch, dass die ersten Zeitabstände kleiner als die zweiten Zeitabstände sind, wird die Kontrollmessung durch die Kontrollmesssonde nicht für jeden durch die Hauptmesssonde ermittelten Messwert ermittelt, sondern nur einmal am Tag oder nur für jeden zehnten Hauptmesswert. Durch die Verringerung der Anzahl der Kontrollmessungen kann Energie gespart werden.

Durch die vorteilhafte Ausgestaltung nach Anspruch 11 werden die Messdaten vor unbefugtem Zugriff geschützt.

Durch die vorteilhafte Ausgestaltung nach Anspruch 12 erkennt die Internetplattform selbständig, ob die Messwerte von den einzelnen Messvorrichtungen in den richtigen Zeitabständen und zur richtigen Zeit ankommen oder ob es Datenausfälle gibt. Auch hierdurch kann festgestellt werden, ob bei einer der Messvorrichtungen ein Fehler vorliegt.

Gemäß der Ausgestaltung nach Anspruch 13 lassen sich die Mess- und Überwachungsdaten von der Internetplattform in einer nachgeordneten Auswerteeinrichtung analysieren, auswerten und weiterverarbeiten.

Es können mehrere Messvorrichtungen vorhanden sein, die alle die gleich physikalische Größe, z. B. Füllstand, Pegel, messen und/oder es können Messvorrichtungen eingebunden werden, die unterschiedliche physikalische Größen messen. Auch können in einer Messvorrichtung mehrere unterschiedliche physikalische Größen gemessen werden.

Weitere Einzelheiten, Merkmale und Vorteile der Erfindung ergeben sich aus der nach folgenden Beschreibung einer bevorzugten Ausführungsform anhand der Zeichnungen.

Es zeigt:
Fig. 1 eine schematische Darstellung einer bevorzugten Ausführungsform der Erfindung, und
Fig. 2 eine schematische Darstellung der beispielhaften Ausführungsform der Messeinrichtung in Form einer Pegelmesseinrichtung.

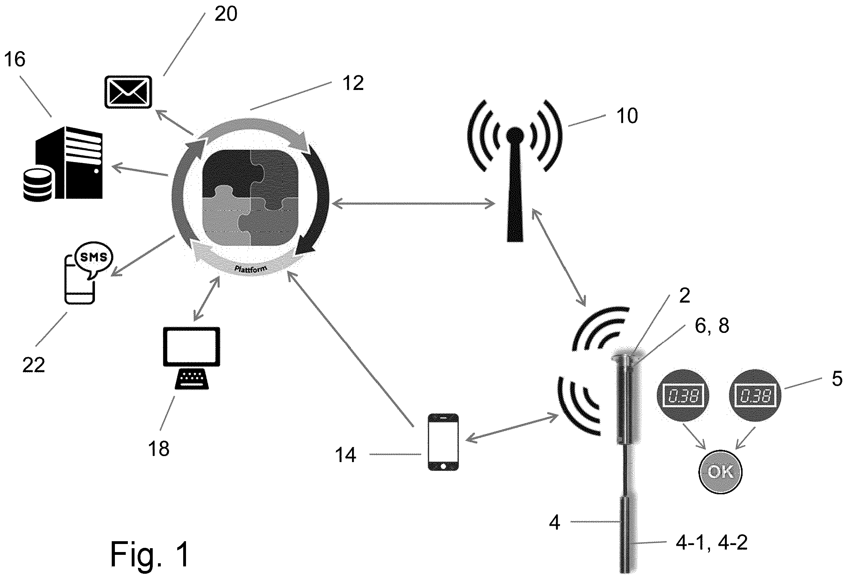

Fig. 1 zeigt schematisch den Aufbau einer beispielhaften Ausführungsform des Messsystems gemäß der Erfindung. Eine Messvorrichtung 2 umfasst ein Sondenteil 4 und eine damit verbundene Verarbeitungseinrichtung 6 mit Datenfernübertragungsmodul 8. Das Sondenteil 4 umfasst eine Hauptmesssonde 4-1, die eine bestimmte physikalische Größe nach einem ersten Messprinzip ermittelt, und eine Kontrollmesssonde 4-2, die die gleiche physikalische Größe nach einem zweiten, unterschiedlichen Messprinzip ermittelt. Stimmen die durch die beiden Messsonden 4-1, 4-2 ermittelten Messdaten überein, wird die Messung als korrekt angesehen. Dieser Messwertvergleich ist durch das Bezugszeichen 5 symbolisiert. Über ein Mobilfunknetz 10 übermittelt das Datenfernübertragungsmodul Messdaten und Auswertedaten an eine Internetplattform 12. Die Übertragung der Daten erfolgt mittels LTE- und GSM-Protokollen, und insbesondere mittels LPWA-Netzprotokollen (Low-Power-Wide-Area), wie dem NB-IOT- und LTE-Cat-M1-Protokoll. Mobilfunknetze stehen flächendeckend zur Verfügung und durch die LPWA-Protokolle verringert sich der Energieverbrauch der Messvorrichtungen. Vor Ort können die Daten aus der Messeinrichtung auch über Bluetooth auf ein mobiles Kommunikationsendgerät, z. B. Smartphone 14 ausgelesen werden. Mit entsprechender Software kann die jeweilige Messvorrichtung 2 auch konfiguriert werden. Das Smartphone 14 kann die Daten wiederum über Mobilfunk an die Internetplattform 12 übermitteln. Die Verbindung zwischen Messvorrichtung 2 und der Internetplattform 12 und zwischen dem Smartphone 14 und der Internetplattform 12 erfolgt mittels sicherer VPN-Verbindung oder über ein sicheres Internet- oder Übertragungs-Protokoll (z. B. COAP über UDP/IP). Die Internetplattform 12 ist mit eigener Intelligenz ausgestattet und kann über eine ebenfalls sichere Verbindung mit einer externen Auswertevorrichtung 16 oder mit einem Datenterminal 18 verbunden sein. Die Internetplattform 12 kann auch Alarm- und Fehlermeldungen per Email 20 oder per SMS 22 absetzen und damit z. B. einen Bereitschaftsdienst alarmieren.

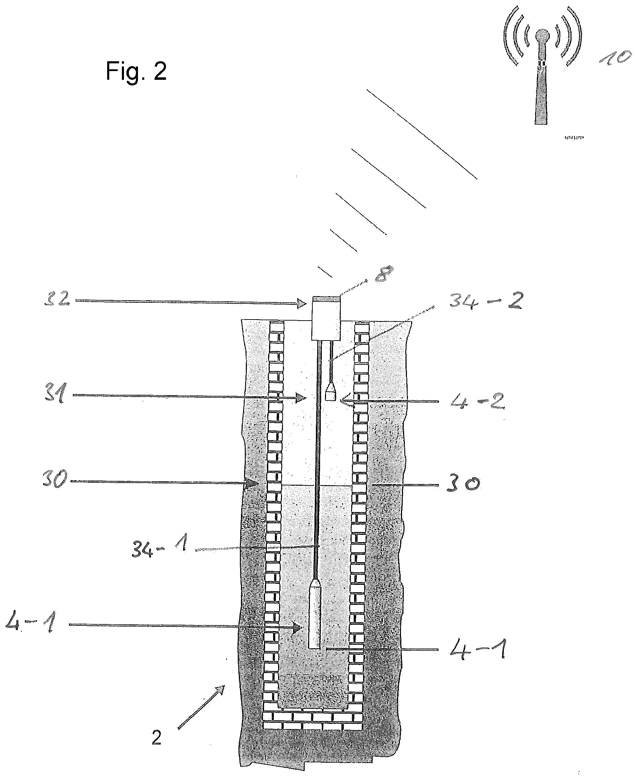

Fig. 2 zeigt schematisch einen Brunnen oder eine Pegelmessvorrichtung 2 entlang eines Flusslaufs oder für Grundwasser mit einem Wasserpegel 30. Die Pegelmessvorrichtung 2 umfasst mit einem angeordnet, die ein Kopfteil 32 sowie das Sondenteil 4. Das Sondenteil 4 umfasst die Hauptmesssonde 4-1, die den Wasserpegel 30 mittels dem hydrostatischen Druck ermittelt, und eine Kontrollmesssonde 4-2, die den Wasserpegel mittels Ultraschall- oder Laufzeitsensor ermittelt. Der Kopfteil enthält eine Batterie, das Datenfernübertragungsmodul 8 und die Verarbeitungseinrichtung 6. Die beiden Pegelsonden 4-1, 4-2 sind über ein erstes Kabel 34-1 mit dem Kopfteil 32 verbunden. Die Hauptmesssonde 4-1 ist in die Flüssigkeit eingetaucht und die Kontrollmesssonde 4-2 ist über dem Wasserpegel 30 angeordnet. Mit dem Datenfernübertragungsmodul 8 im Kopfteil 32 können die Messdaten beider Pegelsonden 4-1, 4-2 auf die entfernte Internetplattform 12 übertragen werden. Die Hauptmesssonde 4-1 misst laufenden Pegelwerte und die Kontrollmesssonde 4-2 ermittelt in vorbestimmten Abständen oder sporadisch Pegelwerte und vergleicht sie mit den von der Hauptmesssonde gemessenen Pegelwerten. Treten Abweichungen auf, die einen voreinstellbaren Toleranzbereich überschreiten, wird ein Alarm an die Internetplattform 12 übermittelt, die dann einen Alarm ausgibt für Personal in einer Überwachungszentrale oder eine Alarm-SMS oder eine Alarm-Email für Bereitschaftspersonal ausgibt. In jedem Fall wird dafür Sorge getragen, dass ein Techniker die fragliche Messeinrichtung 2 vor Ort überprüfen kann.

Die Kontrollmesssonde 4-2 wird über ein zweites Kabel 16 mit dem Kopfteil 32 verbunden. Anstelle einer Kabelverbindung kann die beiden Messsonden 4-1, 4-2 auch drahtlos mit dem Kopfteil 32 verbunden werden. Im Gegensatz zur hydrostatischen Messung durch die Hauptmesssonde 4-1, bei der der Drucksensor ins Wasser eintauchen muss, um die Füllhöhe zu messen, wird der Laufzeitsensor der Kontrollmesssonde 4-2 über einen zu erwartenden Höchstwasserspiegel 31 positioniert. Er misst dabei über eine Laufzeitmessung auf Basis von Ultraschall, Radar oder Licht den Abstand zur aktuellen Wasseroberfläche 30. In der Verarbeitungseinrichtung 6 des Kopfteils 32 laufen die Pegelwerte der beiden Messsonden 4-1, 4-2 zusammen und können miteinander verglichen werden. Der Anwender hat dabei die Möglichkeit eine maximal zulässige Abweichung der beiden Messwerte voneinander (Toleranzbereich) einzustellen. Wird diese Abweichung überschritten, dann kann über das eingebaute Datenfernübertragungsmodul 8 eine Alarmmeldung an die Internetplattform 12 abgesetzt werden.

Alternativ ist es auch möglich, den Messwertvergleich und die Alarmierung von der nachgelagerten Internetplattform 12 aus zu steuern. Um in der Messvorrichtung 2 die Batterien nicht ständig durch zwei Messsonden zu belasten wird es im Regelfall vollkommen ausreichend sein, die Kontrollmessung nur halbtätig oder einmal am Tag auszuführen. Durch diese tägliche Verifizierung der Messwerte wird ein Abdriften oder gar ein Komplettausfall der Hauptmesssonde 4-1 sehr zeitnah detektiert. Der Anwender kann dadurch sehr schnell reagieren und es fehlen dann nur wenige Messwerte. Zudem bietet sich die Möglichkeit bei Verlust der Hauptmesswerte zumindest kurzeitig auf die Kontrollmesswerte zurückzugreifen.

Zu Schutzwecken können beide Kabel 34-1, 34-2 jeweils in einem Pegelrohr abgehängt werden.

### Bezugszeichenliste:

- 2: Messvorrichtung, Messstelle
- 4: Sondenteil
- 4-1: Hauptmesssonde
- 4-2: Kontrollmesssonde
- 5: Messwertvergleich
- 6: Verarbeitungseinrichtung
- 8: Datenfernübertragungsmodul
- 10: Mobilfunknetz
- 12: Internetplattform
- 14: Smartphone, mobiles Kommunikationsendgerät
- 16: externe Auswertevorrichtung
- 18: Datenterminal
- 20: Email-Alarm durch 12
- 22: SMS-Alarm durch 12

- 30: Wasserpegel
- 31: Höchstwasserpegel
- 32: Kopfteil
- 34-1: erstes Kabel
- 34-2: zweites Kabel

## Patentansprüche

1. Messsystem zum Ermitteln und Überwachen von Messwerten für bestimmte physikalische Größen, mit
einer Internetplattform (12) zum Speichern und Auswerten von Messwerten, die mittels Datenfernübertragung mit wenigstens einer Messvorrichtung (2) verbunden ist,
wobei die wenigstens eine Messvorrichtung (2) aufweist:
eine Hauptmesssonde (4-1), dazu eingerichtet, in bestimmten ersten Zeitabständen Hauptmesswerte einer bestimmten physikalischen Messgröße nach einem ersten Messprinzip zu ermitteln,
eine Kontrollmesssonde (4-2), dazu eingerichtet, in bestimmten zweiten Zeitabständen Kontrollmesswerte der bestimmten physikalischen Messgröße nach einem zweiten Messprinzip zu ermitteln, und
ein Datenfernübertragungsmodul (8) zum Übertragen der durch die beiden Messsonden ermittelten Messwerte an die Internetplattform (12),
**dadurch gekennzeichnet, dass** die wenigstens eine Messvorrichtung (2) eine Verarbeitungseinrichtung (6) umfasst, die die Messwerte von den beiden Messsonden (4-1, 4-2) vergleicht und ein Alarm- oder Überwachungssignal erzeugt, wenn die beiden Messwerte nicht innerhalb eines voreingestellten Toleranzbereichs liegen, und
dass die ersten Zeitabstände zwischen den Messungen der Hauptmesssonde (4-1) kleiner sind als die zweiten Zeitabstände zwischen den Messungen der Kontrollmesssonde (4-2).

2. Messsystem nach Anspruch 1, **dadurch gekennzeichnet, dass** die Energieversorgung der wenigstens einen Messvorrichtung (2) mittels Batterie oder Akku erfolgt.

3. Messsystem nach einem der vorhergehenden Ansprüche, **dadurch gekennzeichnet, dass** das Datenfernübertragungsmodul (8) die Daten mittels Mobilfunknetzen (10) und insbesondere mittels LPWA-Netzwerkprotokollen überträgt.

4. Messsystem nach einem der vorhergehenden Ansprüche, **dadurch gekennzeichnet, dass** das Datenfernübertragungsmodul (8) mittels Bluetooth mit mobilen Kommunikationsendgeräten (14) verbindbar ist.

5. Messsystem nach einem der vorhergehenden Ansprüche 1 bis 4, **dadurch gekennzeichnet, dass** der voreingestellte Toleranzbereich beim Vergleichen der Messwerte durch den Anwender einstellbar ist.

6. Messsystem nach einem der vorhergehenden Ansprüche, **dadurch gekennzeichnet, dass** die vorbestimmte physikalische Größe ein Pegel oder Füllstand (30) ist.

7. Messsystem nach Anspruch 6, **dadurch gekennzeichnet, dass** die Hauptmesssonde (4-1) eine Hauptpegelmesssonde ist, die den Pegel mittels hydrostatischer Druckmessung ermittelt, und dass die Kontrollmesssonde (4-2) eine Kontrollpegelmesssonde ist, die den Pegel mittels Ultraschall, Radar oder Licht ermittelt.

8. Messsystem nach einem der vorhergehenden Ansprüche, **dadurch gekennzeichnet, dass** die wenigstens eine Messvorrichtung (2) zusätzlich weitere physikalische Größen, wie Temperatur- und/oder Leitfähigkeitssensor ermittelt.

9. Messsystem nach einem der vorhergehenden Ansprüche, **dadurch gekennzeichnet, dass** die beiden Messsonden (4-1, 4-2) und die übrigen Komponenten (32) der Messeinrichtung (2) räumlich getrennt voneinander angeordnet und über Kabel (34) oder drahtlos miteinander verbunden sind.

10. Verfahren zum Betrieb eines Messsystems nach einem der vorhergehenden Ansprüche mit dem Verfahrensschritten:
Ermitteln von Hauptmesswerten einer bestimmten physikalischen Messgröße durch die Hauptmesssonde (4-1) in bestimmten ersten Zeitabständen;
Ermitteln von Kontrollmesswerten der bestimmten physikalischen Messgröße durch die Kontrollmesssonde (4-2) in bestimmten zweiten Zeitabständen; und
Vergleichen (5) der Hauptmesswerte mit den Kontrollmesswerten und Übertragung eines Alarmsignals an die Internetplattform (12), wenn die beiden Messwerte nicht innerhalb eines voreingestellten Toleranzbereichs liegen,
wobei die ersten Zeitabstände zwischen den Messungen der Hauptmesssonde (4-1) kleiner sind als die zweiten Zeitabstände zwischen den Messungen der Kontrollmesssonde (4-2).

11. Verfahren nach Anspruch 10, **dadurch gekennzeichnet, dass** die Datenfernübertragung zwischen der wenigstens einen Messvorrichtung (2) und der Internetplattform (12) mittels VPN und/oder https-Protokoll erfolgt.

12. Verfahren nach einem der vorhergehenden Ansprüche 10 bis 11, **dadurch gekennzeichnet, dass** die Internetplattform (12) überwacht, ob die wenigstens eine Messvorrichtung (2) in den vorbestimmten Zeitabständen Messwerte übermittelt.

13. Verfahren nach einem der vorhergehenden Ansprüche 10 bis 12, **dadurch gekennzeichnet, dass** die Auswertung der Messdaten in der Internetplattform (12) oder in einer nachgeordneten Auswertevorrichtung (16) erfolgt.

## Claims

1. A measuring system for determining and monitoring measured values for specific physical quantities, comprising
an internet platform (12) for storing and evaluating measured values, which is connected to at least one measuring device (2) by means of remote data transmission,
the at least one measuring device (2) comprising:
a main measuring probe (4-1), configured to determine main measured values of a specific physical measured variable at specific first time intervals according to a first measuring principle,
a control measuring probe (4-2), set up to determine control measured values of the specific physical measured variable at specific second time intervals according to a second measuring principle, and
a remote data transmission module (8) for transmitting the measured values determined by the two measuring probes to the internet platform (12),
**characterized in that** the at least one measuring device (2) includes a processing device (6) that compares the measured values from the two measuring probes (4-1, 4-2) and generates an alarm or monitoring signal if the two measured values are not within a preset tolerance range, and
that the first time intervals between the measurements of the main measuring probe (4-1) are smaller than the second time intervals between the measurements of the control measuring probe (4-2).

2. The measuring system according to claim 1, **characterized in that** the power supply of the at least one measuring device (2) is provided by means of a battery or rechargeable battery.

3. The measuring system according to any of the preceding claims, **characterized in that** the remote data transmission module (8) transmits the data by means of mobile radio networks (10) and in particular by means of LPWA network protocols.

4. The measuring system according to any of the preceding claims, **characterized in that** the remote data transmission module (8) can be connected to mobile communication terminals (14) by means of Bluetooth.

5. The measuring system according to any of preceding claims 1 to 4, **characterized in that** the preset tolerance range can be set by the user when comparing the measured values.

6. The measuring system according to any of the preceding claims, **characterized in that** the predetermined physical variable is a level or filling level (30).

7. The measuring system according to claim 6, **characterized in that** the main measuring probe (4-1) is a main level measuring probe which determines the level by means of hydrostatic pressure measurement, and **in that** the control measuring probe (4-2) is a control level measuring probe which determines the level by means of ultrasound, radar or light.

8. The measuring system according to any of the preceding claims, **characterized in that** the at least one measuring device (2) additionally determines further physical variables, such as temperature and/or conductivity sensor.

9. The measuring system according to any of the preceding claims, **characterized in that** the two measuring probes (4-1, 4-2) and the other components (32) of the measuring device (2) are arranged spatially separated from one another and are connected to one another via cables (34) or wirelessly.

10. A method for operating a measuring system according to any of the preceding claims, comprising the method steps of:
Determining main measured values of a specific physical measured variable by the main measuring probe (4-1) at specific first time intervals;
determining control measured values of the determined physical measured variable by the control measuring probe (4-2) at specific second time intervals; and
comparing (5) the main measured values with the control measured values and transmitting an alarm signal to the Internet platform (12) if the two measured values are not within a preset tolerance range,
wherein the first time intervals between the measurements of the main measuring probe (4-1) are smaller than the second time intervals between the measurements of the control measuring probe (4-2).

11. The method according to claim 10, **characterized in that** the remote data transmission between the at least one measuring device (2) and the Internet platform (12) takes place by means of VPN and/or https protocol.

12. The method according to any of the preceding claims 10 to 11, **characterized in that** the internet platform (12) monitors whether the at least one measuring device (2) transmits measured values at the predetermined time intervals.

13. The method according to any of preceding claims 10 to 12, **characterized in that** the evaluation of the measurement data takes place in the internet platform (12) or in a downstream evaluation device (16).

## Revendications

1. Système de mesure pour déterminer et surveiller des valeurs de mesure pour des grandeurs physiques déterminées, avec
une plateforme Internet (12) pour enregistrer et évaluer des valeurs de mesure, plateforme qui est connectée par télétransmission de données à au moins un dispositif de mesure (2), dans lequel le au moins un dispositif de mesure (2) présente :
une sonde de mesure principale (4-1) qui est configurée pour déterminer, à de premiers intervalles de temps déterminés, des valeurs de mesure principales d'une grandeur de mesure physique déterminée selon un premier principe de mesure,
une sonde de mesure de contrôle (4-2) qui est configurée pour déterminer, à de seconds intervalles de temps déterminés, des valeurs de mesure de contrôle de la grandeur de mesure physique déterminée selon un second principe de mesure, et
un module de télétransmission de données (8) pour transmettre à la plateforme Internet (12) les valeurs de mesure déterminées par l'intermédiaire des deux sondes de mesure,
**caractérisé en ce que** le au moins un dispositif de mesure (2) comprend un appareil de traitement (6) qui compare les valeurs de mesure provenant des deux sondes de mesure (4-1, 4-2) et génère un signal d'alarme ou de surveillance lorsque les deux valeurs de mesure ne se situent pas dans une plage de tolérance préréglée, et
**en ce que** les premiers intervalles de temps entre les mesures de la sonde de mesure principale (4-1) sont inférieurs aux seconds intervalles de temps entre les mesures de la sonde de mesure de contrôle (4-2).

2. Système de mesure selon la revendication 1, **caractérisé en ce que** l'alimentation en énergie du au moins un dispositif de mesure (2) s'effectue au moyen d'une batterie ou d'un accumulateur.

3. Système de mesure selon l'une quelconque des revendications précédentes, **caractérisé en ce que** le module de télétransmission de données (8) transmet les données au moyen de réseaux de téléphonie mobile (10) et en particulier au moyen de protocoles de réseau LPWA.

4. Système de mesure selon l'une quelconque des revendications précédentes, **caractérisé en ce que** le module de télétransmission de données (8) peut être connecté à des terminaux de communication mobiles (14) au moyen du Bluetooth.

5. Système de mesure selon l'une quelconque des revendications précédentes 1 à 4, **caractérisé en ce que** la plage de tolérance préréglée est réglable par l'utilisateur lors de la comparaison des valeurs de mesure.

6. Système de mesure selon l'une quelconque des revendications précédentes, **caractérisé en ce que** la grandeur physique prédéterminée est un seuil ou un niveau de remplissage (30).

7. Système de mesure selon la revendication 6, **caractérisé en ce que** la sonde de mesure principale (4-1) est une sonde de mesure de seuil principale qui détermine le seuil au moyen d'une mesure de pression hydrostatique, et **en ce que** la sonde de mesure de contrôle (4-2) est une sonde de mesure de seuil de contrôle qui détermine le seuil au moyen d'ultrasons, d'un radar ou de lumière.

8. Système de mesure selon l'une quelconque des revendications précédentes, **caractérisé en ce que** le au moins un dispositif de mesure (2) détermine en outre des grandeurs physiques supplémentaires, comme une sonde de température et/ou de conductivité.

9. Système de mesure selon l'une quelconque des revendications précédentes, **caractérisé en ce que** les deux sondes de mesure (4-1, 4-2) et les composants (32) restants de l'appareil de mesure (2) sont séparés spatialement les uns des autres et connectés entre eux par des câbles (34) ou sans fil.

10. Procédé de fonctionnement d'un système de mesure selon l'une quelconque des revendications précédentes avec les étapes de procédé consistant à :
déterminer des valeurs de mesure principales d'une grandeur de mesure déterminée par la sonde de mesure principale (4-1) à de premiers intervalles de temps déterminés ;
déterminer des valeurs de mesure de contrôle de la grandeur physique déterminée par la sonde de mesure de contrôle (4-2) à de seconds intervalles de temps déterminés ; et
comparer (5) les valeurs de mesure principales avec les valeurs de mesure de contrôle et transmettre un signal d'alarme à la plateforme Internet (12) si les deux valeurs de mesure ne se situent pas dans une plage de tolérance préréglée,
dans lequel les premiers intervalles de temps entre les mesures de la sonde de mesure principale (4-1) sont inférieurs aux seconds intervalles de temps entre les mesures de la sonde de mesure de contrôle (4-2).

11. Procédé selon la revendication 10, **caractérisé en ce que** la télétransmission de données entre le au moins un dispositif de mesure (2) et la plateforme Internet (12) s'effectue au moyen d'un VPN et/ou d'un protocole HTTPS.

12. Procédé selon l'une quelconque des revendications précédentes 10 à 11, **caractérisé en ce que** la plateforme Internet (12) surveille si le au moins un dispositif de mesure (2) transmet des valeurs de mesure lors des intervalles de temps prédéterminés.

13. Procédé selon l'une quelconque des revendications précédentes 10 à 12, **caractérisé en ce que** l'évaluation des données de mesure s'effectue dans la plateforme Internet (12) ou dans un dispositif d'évaluation (16) en aval.
